# EUROPEAN PATENT APPLICATION

(11) **EP 4 016 020 A1**
(43) Date of publication of application: **22.06.2022**
(21) Application number: 20215546.1
(22) Date of filing: 18.12.2020
(51) Int. Cl.: G01J 5/04, G05D 23/19

(54) **INFRARED TEMPERATURE SENSOR FOR MEASURING THE TEMPERATURE OF A HEAT EXCHANGER AND SYS-TEM FOR KEEPING HEAT TRANSFER FLUID FLOW CONSTANT IN A HEAT EXCHANGER**

(71) Applicant: Danfoss A/S, 6430 Nordborg (DK)
(72) Inventor: Clausen, Anders Østergaard, 6430 Nordborg (DK); Gammeljord, Peter, 6430 Nordborg (DK); Hesseldahl, Søren, 6430 Nordborg (DK); Munch, Lars, 6430 Nordborg (DK)
(74) Representative: Patentanwälte Olbricht Buchhold Keulertz

(57) **Abstract**

The present invention pertains to an infrared temperature sensor for measuring the temperature of a heat exchanger, comprising a housing, a printed circuit board, a battery, an adaptor for attaching the infrared temperature sensor to a surface and an infrared sensor element. The invention also pertains to a system for keeping heat transfer fluid flow constant in a heat exchanger, said system comprising an electronic thermostat and a temperature sensor, wherein the electronic thermostat and the temperature sensor are wirelessly connected to each other.

## Description

The present invention pertains to an infrared temperature sensor for measuring the temperature of a heat exchanger, comprising a housing, a printed circuit board, a battery, an adaptor for attaching the infrared temperature sensor to a surface and an infrared sensor element. The invention also pertains to a system for keeping heat transfer fluid flow constant in a heat exchanger, said system comprising an electronic thermostat and a temperature sensor, wherein the electronic thermostat and the temperature sensor are wirelessly connected to each other.

It is known from the art to provide heat exchangers with electronic thermostats for automatically regulating the temperature of the heat exchangers. The electronic thermostat may comprise a step motor and a controller, which in combination with a valve operated by the step motor vary the heating fluid flow through the heat exchanger. The controller may be set such that a desired temperature or temperature range of the heat exchanger and therefore of the room heated by the heat exchanger is obtained. Usually, a plurality of heat exchangers is used as part of a central heating system within a given edifice and in different rooms.

A person may change the settings of the electronic thermostat in order to change the temperature in a given room or part of a building. The person may only want to change the temperature of a single or only a limited number of heat exchangers of a central heating system. However, by changing the flow through only a limited number of heat exchangers, the flow in the whole central heating system and not only in the associated heat exchanger is affected. For example, if a person decreases the flow through one heat exchanger of a central heating system, the differential pressure and therefore the flow through the remaining heat exchangers may automatically be increased. This means that all heat exchangers of the central heating system may be affected by the adjustment of a single heat exchanger of said system.

According to the state of the art, the problem with the undesired change in differential pressure is solved by additional features such as a dynamic valve combined with flow measuring means. Although this solution offers fast regulation of the corresponding heat exchangers, it also comes at considerable costs.

Another known solution for compensating undesired changes in differential pressure across heat exchangers is simply waiting until the room temperature sensor of the electronic thermostat registers a higher room temperature. Once the room temperature sensor of the electronic thermostat registers a higher room temperature, the valve of the electronic thermostat may be shut or partially shut accordingly. However, this can take 30 minutes or more depending on the size of the room. This solution therefore represents very slow regulation with increased energy consumption and corresponding higher fuels costs.

The aim of the present invention is to overcome the above-mentioned problems by providing an improved sensor and an improved system for keeping heat transfer fluid flow constant in a heat exchanger. This aim is achieved by a sensor according to claim 1 and a system according to claim 11. Preferable embodiments of the invention are subject to the dependent claims.

According to the invention, an infrared temperature sensor is provided for measuring the temperature of a heat exchanger, comprising a housing, a printed circuit board, an optional battery, an adaptor for attaching the infrared temperature sensor to a surface and an infrared sensor element.

The sensor may be attachable to any part of the heat exchanger, including an inlet conduit or an outlet conduit of the heat exchanger. The heat exchanger may be a radiator, or any other type of heat exchanger. The housing may contain and protect all or some of the other components of the sensor. The printed circuit board may contain electronic component such as the infrared sensor element, communication component and generally all or most of the electronic components required for measuring a temperature by means of the infrared sensor element and transferring the measured values to another device, such as an electronic thermostat. The battery may provide electric power to all electric components of the sensor. Clearly, the presence of the battery is crucial for the functioning of the sensor. However, as the battery is a replaceable item of the sensor, the invention may be carried out whether or not the battery is provided in the sensor.

Using an infrared temperature sensor represents a cheap way of measuring the temperature of a heat exchanger for detecting pressure drops in the heat exchanger, especially compared to known solutions, which measure the pressure directly by e.g. pressure gauges. The sensor may be used for measuring a temperature difference over time, If other causes for a temperature difference (such as a person changing the settings of a corresponding heating system) are ruled out, this temperature difference may be interpreted as indicative of an undesired pressure drop or increase. The undesired pressure drop or pressure change may be the result of changes of the settings of other heat exchangers than the heat exchanger associated with the infrared temperature sensor, which are part of the same central heating system.

Furthermore, the claimed infrared temperature sensor offers a more reliable way of performing measurements on the heat exchanger. Additionally, the sensor measurement is not dependent on the surface of the heat exchanger or return pipe or other conduits and can function also on dirty, uneven and/or painted surfaces. It is therefore also particularly easy to retrofit a corresponding sensor to an existing central heating system.

The infrared temperature sensor may be used as the return sensor at an outlet conduit of a heat exchanger but could alternatively or additionally be placed at the inlet conduit of a heat exchanger, especially in a case in which the electronic thermostat connected to the infrared temperature sensor is placed at the outlet of the heat exchanger.

In a preferred embodiment of the invention, the housing comprises a bottom part and a top part, wherein the bottom part and the top part are connectable to each other. The limited number of parts forming the housing and the possible use of snap-fit connections for connecting the parts simplify the design and the assembly of the sensor and make the sensor cheaper.

In another preferred embodiment of the invention, a central part is provided between the top part and the bottom part, whereby preferably the bottom part is connectable to the central part in a first direction and the central part is connectable to the top part in a second direction perpendicular to the first direction. The different direction for connecting, and in particular, for snap-fitting the parts of the housing to each other facilitate the opening of the sensor for e.g. replacement of the battery and at the same time make sure that the battery is firmly held in place by the top part. This is particularly the case when the top part is connected to the central part in a direction perpendicular to a direction in which the battery is inserted into the central part.

In another preferred embodiment of the invention, the bottom part, the central part and the top part are each formed integrally. A possible snap fit-connection of these parts can be formed integrally with the corresponding parts. Therefore, the entire housing may be provided in a cost effective manner and without the need for further components such as screws for assembling the housing.

In another preferred embodiment of the invention, the battery is positionable between the central part and the top part in an assembled state of the infrared temperature sensor. The top part may be easily opened for exchanging an empty battery, while the rest of the sensor may remain fixed to the heat exchanger, thereby simplifying the replacement of the battery. The assembled state of the infrared temperature sensor may be defined as the state in which all components of the sensor are positioned such that the sensor can perform its measuring function.

In another preferred embodiment of the invention, the printed circuit board is positionable between the bottom part and the central part. The printed circuit board ant the electronic components provided thereupon are thus protected even when the top part is taken off for battery replacement.

In another preferred embodiment of the invention, the bottom part comprises a window through which the infrared sensor element faces the exterior of the infrared temperature sensor. The term window may be understood in a broad sense and may refer to a simple opening without any cover, an opening with a non-refracting translucent or refracting translucent cover, such as a lens.

In another preferred embodiment of the invention, the battery and the infrared sensor element are positioned on opposite sides of the printed circuit board. The battery may therefore function as a heat shield for the infrared temperature sensor and more specifically for the infrared sensor element positioned on one side of the printed circuit board. This improves the performance of the sensor as infrared sensor elements perform better at higher temperatures. At the same time, the battery is placed further away from the frequently hot heat exchanger. As batteries function better when not exposed to excessive temperatures, the lifetime of the battery is increased to 5 years or more with the increased distance from the heating source, i.e. the heat exchanger.

Between the battery and the printed circuit board, additional space and/or air may be provided in order to position the battery as far as possible away from the heat source i.e. the heat exchanger. The battery may be positioned as far away as possible from the printed circuit board but still within the housing of the sensor. The printed circuit board may provide additional heat protection to the battery and at the same time ensure that the infrared sensor element is less affected thermally by the surrounding i.e. less cooled down by the ambient temperature air. Therefore, the battery also functions as a cooling protection or printed circuit board insulation, ensuring that the infrared sensor element is kept warm. This is of particular benefit to the sensor as infrared temperature measurements are more precise and reliable if conducted in hot areas or environments.

In another preferred embodiment of the invention, the adaptor is formed integrally with the bottom part or is a separate component from the bottom part. The adaptor may comprise an opening, which aligns with the window. The side of the adaptor facing the heat exchanger may be made to adapt to the shape of the heat exchanger, the conduit or any other component to which the sensor may be attached.

In another preferred embodiment of the invention, the infrared temperature sensor comprises wireless communication means. The wireless communication means may comprise WLAN and/or Bluetooth^{™} components and may be provided as a part of the printed circuit board of the infrared temperature sensor.

The invention is also directed at a system for keeping heat transfer fluid flow constant in a heat exchanger. The system comprises an electronic thermostat and an infrared temperature sensor according to any of claims 1 to 10, wherein the electronic thermostat and the infrared temperature sensor are wirelessly connected to each other.

Further features, details and advantages of the invention can be derived from the claim set, the figures and the following description of the figures.
- Fig. 1:: a schematic view of the inventive system comprising the sensor according to the present invention;
- Fig. 2:: an exploded view of the sensor in a first perspective;
- Fig. 3:: an exploded view of the sensor in a second perspective;
- Figs. 4a-4d:: the sensor in various stages of assembly;
- Figs. 5a-5d:: the printed circuit board of the sensor in various perspectives;
- Figs. 6a-6c:: the sensor with adaptor in various perspectives and stages of assembly;
- Figs. 7a-7b:: the sensor with adaptor in side and rear view;
- Figs. 8a-8b:: the sensor connected to a conduit in two perspectives; and
- Figs.9a-9b:: the sensor with another adaptor in two perspectives.

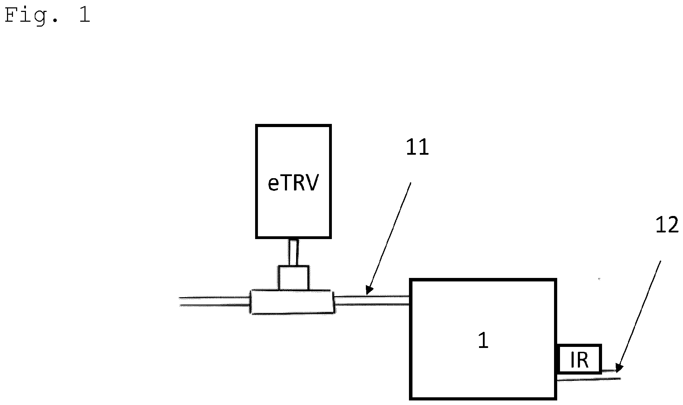

According to figure 1, a heat exchanger 1, equipped with the presently described system, comprises an inlet conduit 11 and an outlet conduit 12 for fluidly connecting the heat exchanger 1 with a heat transfer fluid source such as a boiler. The heat transfer fluid source is not shown in the figure. For controlling the fluid flow in the heat exchanger 1, the system comprises an electronic thermostat eTRV and an infrared temperature sensor IR according to the present invention.

For keeping heat transfer fluid flow constant in the heat exchanger 1, the presently described system and sensor are capable of executing the following steps:
- measuring the temperature of the fluid at the inlet conduit 11 and/or at the outlet conduit 12 at time intervals using the infrared temperature sensor IR;
- calculating the difference between the measured temperatures;
- verifying whether a daily schedule of the electronic thermostat eTRV has been changed and the setpoint of the electronic thermostat eTRV has been changed by a user; and
- varying the fluid flow in the heat exchanger 1 by means of the electronic thermostat eTRV if the daily schedule of the electronic thermostat eTRV has not been changed, the setpoint of the electronic thermostat eTRV has not been changed and the difference between the measured temperatures exceeds a threshold, such that the temperature of the fluid approaches and/or reaches its temperature prior to the threshold exceedance.

The daily schedule of the electronic thermostat may represent some program or data set provided with the electronic thermostat eTRV. The daily schedule may define what temperatures or temperature ranges at what times of a day and/or day of a week the electronic thermostat eTRV controls the heat exchanger 1 to achieve.

The verification whether a daily schedule of the electronic thermostat eTRV has been changed and the setpoint of the electronic thermostat eTRV has been changed by a user may refer to a given time period prior to the measurements of temperature. For example, it may be verified if the daily schedule of the electronic thermostat eTRV has been changed and the setpoint of the electronic thermostat eTRV has been changed by a user within 1, 5 or 10 minutes prior to a given measurement of temperature of the fluid.

If the daily schedule of the electronic thermostat eTRV has been changed or the setpoint of the electronic thermostat eTRV has been changed by a user, then this change and the corresponding change of flow though the heat exchanger 1 is clearly desired and will not be counteracted by the system.

If the return temperature of the fluid raises without a change of the daily schedule of the electronic thermostat eTRV and without a user interference in which the user has e.g. set a different and in particular higher setpoint, then a controller e.g. in the electronic thermostat eTRV can conclude that this is due to a raise in the differential pressure and can compensate for that by closing the valve of the electronic thermostat eTRV by an amount, thereby keeping the flow through the heat exchanger 1 constant or near constant.

The present invention offers an easy way to compensate sudden drops or increases in the differential pressure across a heat exchanger 1 without the use of any pressure measuring device, a delta p regulator, or any additional pressure compensator. According to the invention, only the temperature of the heat transfer fluid of the heat exchanger 1, and in particular the return temperature of the heat transfer fluid is measured over time and an occurring temperature difference may be interpreted as indicative of an undesired pressure drop or increase. Said pressure drop or increase is then balanced out. The flow through the heat exchanger 1 may therefore be kept constant or near constant in circumstances where it actually is supposed to be constant. In effect, the invention may perform a type of hydraulic balancing across the heat exchanger 1.

Clearly, the above cited method steps may be repeated continuously and repetitively. The infrared temperature sensor IR shown in figure 1 is an infrared sensor IR according to the invention. The infrared temperature sensor IR may be connected to the electronic thermostat eTRV via Bluetooth, WLAN or any other suitable connection, in particular wireless connection.

During operation of the heat exchanger 1 and when an equilibrium state of the heat exchanger 1 is found by a controller, in particular a controller of the electronic thermostat eTRV, the return temperature of the heat transfer fluid occurring at the outlet conduit 12 will have a certain constant or near constant value. If the differential pressure over the heat exchanger 1 increases due to e.g. a user changing the setpoint of the electronic thermostat eTRV of another heat exchanger 1, the flow through the heat exchanger 1 will increase, causing the return temperature to increase accordingly.

The controller detects the unexpected increased return temperature via the infrared temperature sensor IR, investigates if settings have changed or a user has set a new setpoint i.e. actually wishes a higher temperature of the heat exchanger 1. If this is not the case, the controller starts to close the valve of the electronic thermostat eTRV by a certain amount. This is done by the step motor of the electronic thermostat eTRV changing the position of the valve by taking one or a few steps.

Each time interval e.g. each minute the temperature sensor may send a new value to the controller of the electronic thermostat eTRV. The controller may continue requesting the step motor to limit or generally, change the flow through the valve until the same or a similar return temperature is obtained as before the unexpected change. Although the present example refers to the return temperature, the inlet temperature may be measured additionally or alternatively.

In the present example, an equilibrium state may be reached at a flow rate of e.g. 17 liters/hour through the heat exchanger 1. An unexpected raise of the flow rate may occur to 19 liter/hours because of a corresponding pressure increase. The return temperature will increase because of the increased flow rate and, at the electronic thermostat eTRV, the controller will start to limit the valve. At the end of the regulation, a flow rate of again have 17 liters/hours will be reached. An equilibrium state is now reestablished with a higher differential pressure, but with the same flow value as before. Hence, flow regulation is achieved.

The whole regulation achieved by means of the present invention may normally take 5-10 minutes. A user present in the area affected by the regulated heat exchanger 1 will not notice any undesired room temperature changes. Thus, according to the invention, the comfort level is increased for the user.

In known prior art solutions the electronic thermostat eTRV uses the room temperature alone for regulating the flow through the heat exchanger 1. This may take about 30 minutes or more and the user will notice an undesired temperature change.

Verifying whether the daily schedule of the electronic thermostat eTRV has been changed and the setpoint of the electronic thermostat eTRV has been changed by a user may be performed only if the calculated difference between the measured temperatures exceeds a threshold. This avoids constantly carrying out verifications, even in situations in which no adjustment of the valve is required. Thus, the amount of calculations performed by the controller may be reduced, thereby increasing the lifespan of batteries required for powering the electronic thermostat eTRV.

The measuring time intervals at which temperatures are measured by the sensor IR may be constant and/or adjustable and/or in the range of 10 seconds to 2 minutes. In a preferred embodiment of the invention, the time intervals may be 1 minute ± 20 seconds.

Measuring temperatures by the infrared temperature sensor IR may occur at two consecutive instances or more than two instances, which may or may not be consecutive instances. Accordingly, temperatures, which have been measured at consecutive instances and/or at instances, which are spaced apart further from each other, may be compared to each other. The comparison of temperatures may comprise the calculation of the differences of said temperatures.

The temperatures may be measured only at the outlet conduit 12 or the inlet conduit 11. Hence, the invention may be carried out with only one single temperature sensor IR in addition to the temperature sensor present at the electronic thermostat eTRV.

The infrared temperature sensor IR may be an infrared temperature sensor IR attached to the outside of the inlet 11 and/or outlet conduit 12. In the embodiment shown in the figure, the infrared temperature sensor IR is attached to the outlet conduit 12. The infrared temperature sensor IR may be wirelessly connected to the electronic thermostat eTRV.

The invention covers a system for keeping heat transfer fluid flow constant in a heat exchanger using the presently described infrared temperature sensor IR. The system may comprise the electronic thermostat eTRV and the infrared temperature sensor IR, wherein the electronic thermostat eTRV and the infrared temperature sensor IR are wirelessly connected to each other.

Clearly, the system may and ought to be used with a plurality of heat exchangers 1, all or some of which may be equipped with the above-mentioned components, i.e. an electronic thermostat eTRV and an infrared temperature sensor IR connected to it. Accordingly, the system may comprise a plurality of pairs of connected electronic thermostats eTRV and temperature sensors IR, wherein each pair of said components may be associated with one heat exchanger 1.

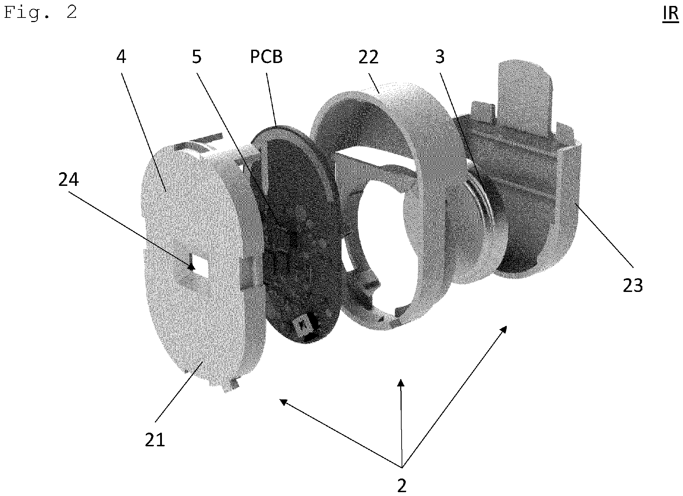

Figure 2 shows the infrared temperature sensor IR in more detail in an exploded view and in a first perspective. The infrared temperature sensor IR comprises a housing 2, a printed circuit board PCB, an optional battery 3, an adaptor 4 for attaching the infrared temperature sensor IR to a surface and an infrared sensor element 5.

The housing 2 comprises a bottom part 21, a central part 22 and a top part 23. The bottom part 21 and the top part 23 are each connectable to the central part 22. As indicated in figure 2, a snap-fit connection is provided between the central part 22 on the one side and the bottom part 21 and top part 23 on the other side. Figure 2 shows an exploded view of the infrared temperature sensor IR in which the snap-fit connection is not engaged and the constituents of the housing 2 are shown spaced apart from each other.

The bottom part 21 comprises a window 24, through which the infrared sensor element 5 may be facing the exterior of the infrared temperature sensor IR. The position of the window 24 and the infrared sensor element 5 defines the area at which the temperature is measured by the infrared temperature sensor IR.

The window shape may be chosen such that no shadows are created neither in the area covered by the light emitted by the infrared sensor element 5 nor in the area in which reflected light shines on the infrared sensor element 5. A plastic film may be added, covering the window 24 and protecting the inside of the infrared temperature sensor IR against dust and other substances.

An adhesive structure such as glue may be applied to the outside of the bottom part 21, pointing in the left direction in figure 2, for attaching the infrared temperature sensor IR to a heat exchanger 1. A foam-like glue or an ordinary glue may be used. A foam-like glue can adapt better to the surface to be measured. Furthermore, the foam offers more heat protection to the battery 3.

Glue may be applied in excessive amounts or large sized portions. Preferably, double sticky tape may be used as an adhesive structure. Clearly, no opaque sticky tape should be placed in front of the window 24, as this would inhibit the correct functioning of the infrared temperature sensor IR. Preferably, the liner for the sticky tape can remain in the area in front of the window 24. Thus, the liner may protect the window 24 and the inside of the infrared temperature sensor IR against dust and other undesired substances.

The bottom part 21 may be snap-fit to the central part 22 in a first direction, roughly the horizontal direction in figure 2. The central part 22 may be snap-fit to the top part 23 in a second direction, roughly the vertical direction in figure 2. The two directions may be perpendicular to each other. Corresponding snap-fit geometries may be provided as shown in the figure. The bottom part 21, the central part 22 and/or the top part 23 may be each formed integrally, in particularly in a moulding process.

The battery 3 is positioned between the central part 22 and the top part 23 in the exploded view of figure 2. Clearly, in an assembled state of the infrared temperature sensor IR, the battery 3 may remain in this position and may contact the printed circuit board PCB for providing electric power to the components provided on the printed circuit board PCB. The printed circuit board PCB is positioned between the bottom part 21 and the central part 22 of the housing 2. Accordingly, the battery 3 and the infrared sensor element 5 provided on the printed circuit board PCB are positioned on opposite sides of the printed circuit board PCB.

The adaptor 4 is formed integrally with the bottom part 21 in the embodiment of figure 2. As will be shown in the following figures, the adaptor 4 may be made as a separate component from the bottom part 21.

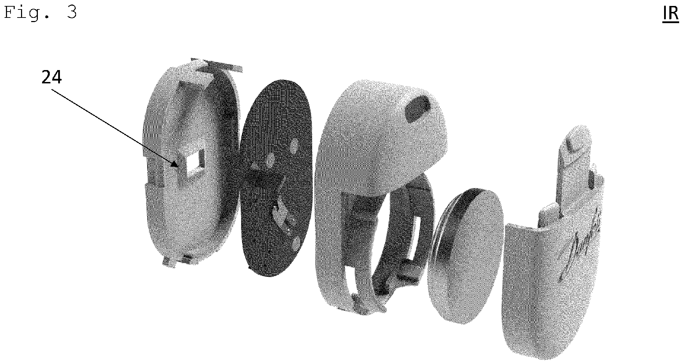

Figure 3 is an exploded view of the infrared temperature sensor IR in a second perspective. Here, the window 24 is shown from the inside of the infrared temperature sensor IR. The window 24 may comprise sloped portions pointing inwards of the infrared temperature sensor IR and towards the position of the infrared sensor element 5, which itself is not visible in figure 3. The window 24 may be thus formed to limit the occurrence of shadows at the printed circuit board PCB, which may be detrimental for the precision of the temperature measurement performed by the infrared temperature sensor IR.

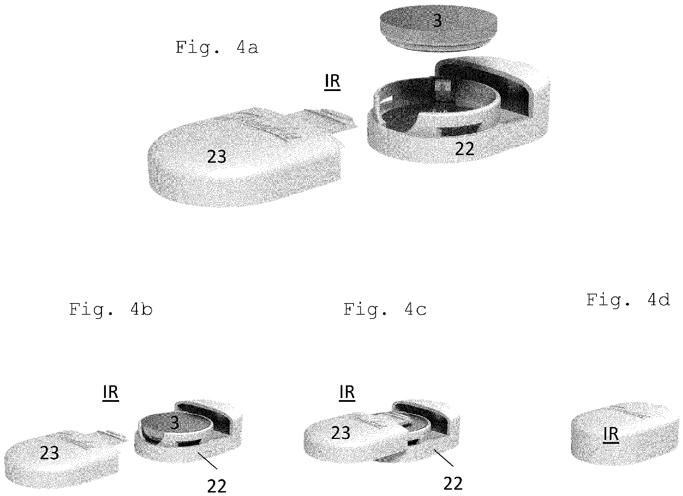

Figures. 4a to 4d show the infrared temperature sensor IR in various stages of assembly. Figure 4a shows an exploded view of how the battery 3 may be positioned into a correspondingly shaped portion of the central part 22 and then covered by the top part 23. The infrared temperature sensor IR is shown almost completely assembled, whereby only the battery 3 and the top part 23 need to be coupled with the remainder of the infrared temperature sensor IR. Figures 4b to 4d show how the top part 23 is slid and snap-fit onto the central part 22 of the housing and the remainder of the infrared temperature sensor IR.

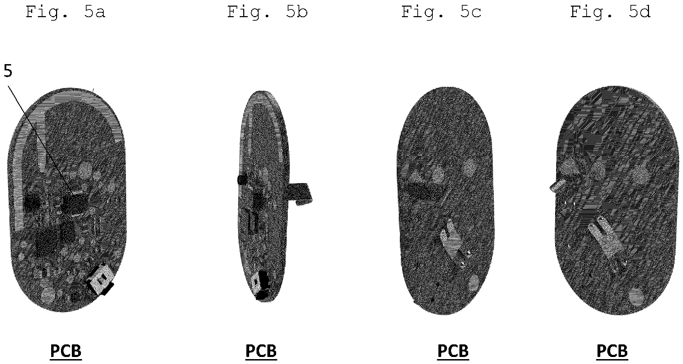

Figures 5a to 5d show the printed circuit board PCB of the infrared temperature sensor IR in various perspectives. Figure 5a shows the side of the printed circuit board PCB on which the infrared sensor element 5 is provided. Figures 5b and 5c show angled views of the printed circuit board PCB and figure 5d shows the battery side of the printed circuit board PCB with contacts for connecting the battery 3 to the electronic components of the printed circuit board PCB.

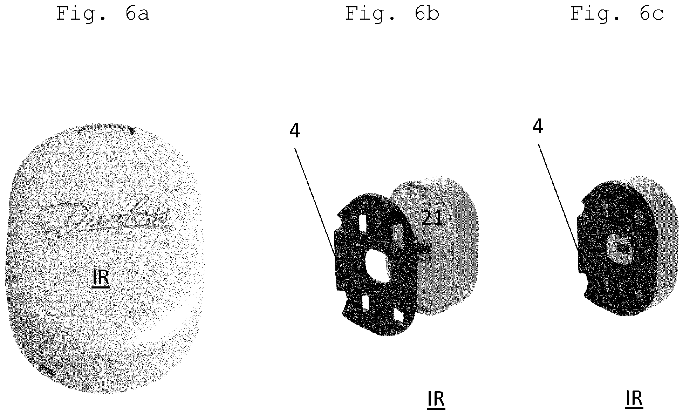

Figures 6a to 6c show the infrared temperature sensor IR with an adaptor 4 in various perspectives and stages of assembly. Figure 6a shows the infrared temperature sensor IR in an angled top view, as it would be seen when attached to a heat exchanger. An adaptor 4 might be present but not be visible in this perspective. Figure 6b shows the infrared temperature sensor IR in an angled rear view and with a detached adaptor 4, wherein the adaptor 4 is a separate component from the bottom part 21. The adaptor 4 may comprise openings for strip fastening the adaptor 4 and the entire infrared temperature sensor IR to e.g. a conduit of a heat exchanger 1. The infrared temperature sensor IR can be attached e.g. glued directly, i.e. without a separate adaptor 4 component, to a heating surface to be measured or the infrared temperature sensor IR can be attached to the heating surface via the separate adaptor 4 shown in figures 6b and 6c. The adaptor 4 can be glued to the infrared temperature sensor IR and/or may be shaped to adapt to a pipe form of a heat exchanger conduit. Alternatively, the adaptor 4 may be an integrated part of the infrared temperature sensor IR, in particular of the bottom part 21 of its housing 2.

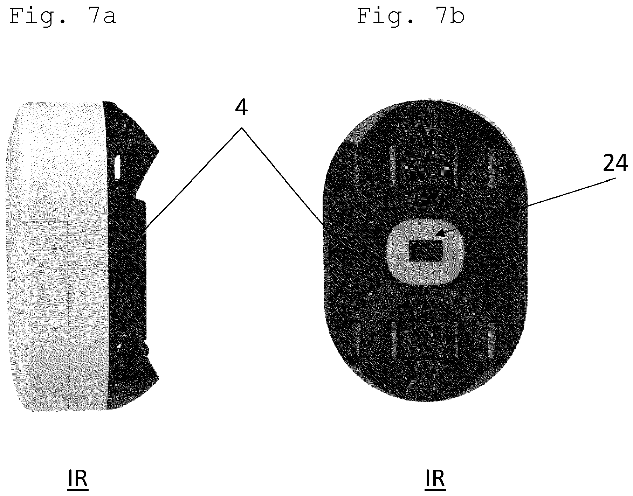

Figures 7a and 7b show the infrared temperature sensor IR with the adaptor 4 as a distinct part in a side and a rear view. The window 24 is shown in figure 7b. Clearly, both, the adaptor 4 and the remainder of the infrared temperature sensor IR need to be formed such that infrared light can travel between the inside and the outside of the infrared temperature sensor IR, i.e. between the infrared sensor element 5 inside the infrared temperature sensor IR and the heating surface to be measured by the infrared temperature sensor IR.

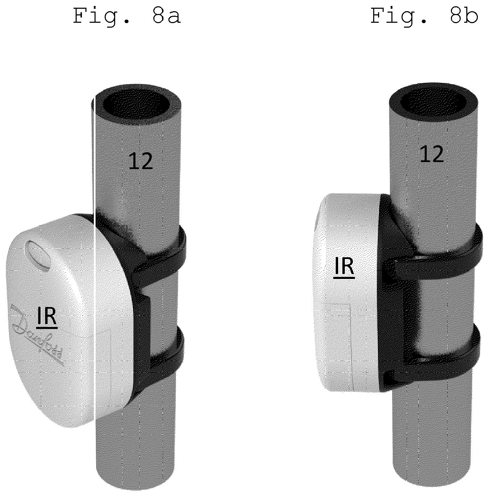

Figures 8a and 8b show the infrared temperature sensor IR connected to a conduit, e.g. an outlet conduit 12 in two perspectives. The infrared temperature sensor IR may be strip fastened, screw clamped or otherwise attached to the conduit. The fixation to the conduit may be as close as possible to the outlet of the heat exchanger 1. In the emdobiment shown in figure 8a and 8b, two identical strips may be used for attaching the infrared temperature sensor IR to the outlet conduit 12.

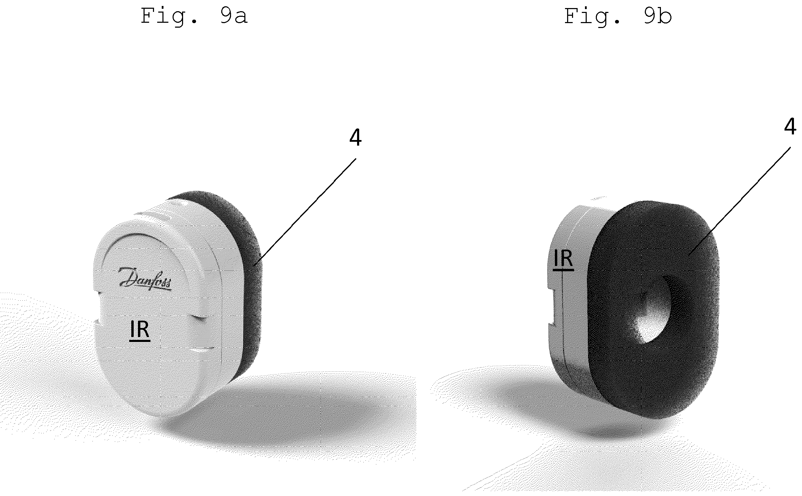

Figures 9a and 9b show the infrared temperature sensor IR with another adaptor 4 in two different perspectives. The adaptor 4 may be made from highly flexible foam such as e.g. PU foam. The flexible foam ensures that a sufficiently large contact surface is provided between the infrared temperature sensor IR and the heat exchanger 1. This is particularly important if the heating pipe or surface to which the infrared temperature sensor IR is attached does not have a plane or generally uniform surface. In one embodiment, adhesive tape may be used to connect the adaptor 4 to a heat exchanger 1.

The invention is not limited to the presently described embodiment. All features described in the claims, the description and shown in the figures may be regarded as relevant to the invention, alone and in combination with each other.

### Reference numbers

- 1: heat exchanger
- 2: housing
- 3: battery
- 4: adaptor
- 5: infrared sensor element
- 11: inlet conduit
- 12: outlet conduit
- 21: bottom part
- 22: central part
- 23: top part
- 24: window
- eTRV: electronic thermostat
- IR: infrared temperature sensor
- PCB: printed circuit board

## Claims

1. Infrared temperature sensor (IR) for measuring the temperature of a heat exchanger (1), comprising a housing (2), a printed circuit board (PCB), an optional battery (3), an adaptor (4) for attaching the infrared temperature sensor (IR) to a surface and an infrared sensor element (5).

2. Infrared temperature sensor (IR) according to claim 1, **characterized in that** the housing (2) comprises a bottom part (21) and a top part (23), wherein the bottom part (21) and the top part (23) are connectable to each other.

3. Infrared temperature sensor (IR) according to claim 2, **characterized in that** a central part (22) is provided between the top part (23) and the bottom part (21), whereby preferably the bottom part (21) is connectable to the central part (22) in a first direction and the central part (22) is connectable to the top part (23) in a second direction perpendicular to the first direction.

4. Infrared temperature sensor (IR) according to claim 3, **characterized in that** the bottom part (21), the central part (22) and the top part (23) are each formed integrally.

5. Infrared temperature sensor (IR) according to any of claims 2 to 4, **characterized in that** the battery (3) is positionable between the central part (22) and the top part (23) in an assembled state of the infrared temperature sensor (IR).

6. Infrared temperature sensor (IR) according to any of claims 3 to 5, **characterized in that** the printed circuit board (PCB) is positionable between the bottom part (21) and the central part (22).

7. Infrared temperature sensor (IR) according to any of claims 2 to 6, **characterized in that** the bottom part (21) comprises a window (24) through which the infrared sensor element (5) faces the exterior of the infrared temperature sensor (IR).

8. Infrared temperature sensor (IR) according to any of the preceding claims, **characterized in that** the battery (4) and the infrared sensor element (5) are positioned on opposite sides of the printed circuit board (PCB).

9. Infrared temperature sensor (IR) according to at least claim 2, **characterized in that** the adaptor (4) is formed integrally with the bottom part (21) or is a separate component from the bottom part (21).

10. Infrared temperature sensor (IR) according to any of the preceding claims, **characterized in that** the infrared temperature sensor (IR) comprises wireless communication means.

11. System for keeping heat transfer fluid flow constant in a heat exchanger, said system comprising an electronic thermostat (eTRV) and an infrared temperature sensor (IR) according to any of claims 1 to 10, wherein the electronic thermostat (eTRV) and the infrared temperature sensor (IR) are wirelessly connected to each other.
